# EUROPEAN PATENT SPECIFICATION

(11) **EP 3 157 987 B1**
(45) Date of publication and mention of the grant of the patent: **16.05.2018**
(21) Application number: 15727004.2
(22) Date of filing: 10.06.2015
(51) Int. Cl.: C08J 5/04, C08L 77/06, C08K 7/14

(54) **POLYAMIDE MOLDING COMPOSITIONS, MOLDED PARTS OBTAINED THEREFROM, AND USE THEREOF**
POLYAMIDFORMZUSAMMENSETZUNGEN, DARAUS ERHALTENE FORMTEILE UND VERWENDUNG DAVON
COMPOSITIONS DE MOULAGE POLYAMIDE, LES PIÈCES MOULÉES OBTENUES À PARTIR DE CEUX-CI ET LEUR UTILISATION

(30) Priority: 20.06.2014 EP 14173315
(43) Date of publication of application: 26.04.2017
(73) Proprietor: Rhodia Operations, 75009 Paris (FR)
(72) Inventor: PARK, Jung Hoon, Incheon 402-739 (KR)
(74) Representative: Schuck, Alexander
(86) International application number: PCT/EP2015/062886
(87) International publication number: WO 2015/193144

(56) References cited:
- US-A1- 2010 279 111
- US-A1- 2012 321 829
- US-A1- 2013 203 910

## Description

### FIELD OF THE INVENTION

The present invention relates to a polyamide molding composition comprising a) at least one semi-aromatic, semi-crystalline polyamide, b) at least flat glass fiber as reinforcing filler, c) at least one aliphatic polyamide comprising recurring units complying with the formula -NH-R²-NH-CO-R³-CO-, wherein R² and R³, equal to or different from each other at each occurrence, are divalent aliphatic hydrocarbon groups, and d) at least one additive, to molded parts obtained therefrom, and to use thereof. The molded parts according to the present invention can be advantageously used to produce automobile components, for example engine components such as intercooler air duct, timing belt cover and engine cover, and housings or housing parts of electrical apparatuses, preferably engine cover for an automobile.

### BACKGROUND OF THE INVENTION

A polyamide is one of the polymers which are frequently used as engineering plastics for a very wide range of applications.

A polyamide molding composition is of significant commercial interest and may be used to produce automobile or electrical components, for example engine components such as intercooler air duct, timing belt cover and engine cover, generally by injection molding.

For particular applications, such as automobile engine components such as intercooler air duct, timing belt cover and engine cover, which are to be exposed to high temperature during their lifecycle, required is a polyamide molding composition which is capable of exhibiting excellent heat resistance, i.e., high performance retention of mechanical properties such as tensile strength (TS) to break and Charpy impact strength after thermal aging, high heat distortion temperature (HDT), low warpage, and minimum distortion during injection molding.

In general, a polyamide molding composition comprising reinforcing fillers exhibits excellent mechanical properties such as high rigidity and excellent toughness in addition to good heat resistance, and thus can be used as structural materials for automobiles. Further, it is well known in the field that flat glass fibers can be used to reinforce a polyamide molding composition in place of standard glass fibers having a circular cross section, since flat glass fibers having a cross section whose major axis and minor axis have different values enable higher packing density at high degrees of reinforcement, resulting in higher flexural modulus, higher mechanical strength, especially along the direction of the fiber, and thus improve mechanical strengths and dimensional stability of the articles produced using the polyamide composition due to said geometrical advantages than the standard glass fibers. In this regard, however, relatively high amount, for example, at least 40 % by weight (wt %) of flat glass fibers are generally incorporated into the polyamide composition so as to meet the required mechanical requirements of polyamide composition, e.g., tensile/flexural modulus, tensile/flexural stress, impact strength, etc. in addition to a high thermal stability. For instance, US patent No. 8,324,307 B2 discloses a reinforced polyamide molding composition containing high-melting partially aromatic polyamides and especially at least 50 wt % of flat glass fibers, which shows good processability, low deformation, high surface quality and higher impact strength. US 2012/0321829 concerns heat-aging-resistant polyamide molding compounds based on semicrystalline, semiaromatic polyamides, a method for preparing them, and their usages. Therefore, a polyamide composition comprising limited amount of flat glass fibers, hence reducing total weight of the polyamide composition while maintaining advantageous mechanical and thermal properties at a time, is a current shortfall in this technology field.

### DESCRIPTION OF THE INVENTION

The present invention relates to a composition comprising :
a) at least one semi-aromatic, semi-crystalline polyamide in an amount of 70 to 84 wt %;
b) at least one flat glass fiber in an amount of 12 to less than 20 wt %;
c) at least one aliphatic polyamide comprising recurring units complying with the formula -NH-R²-NH-CO-R³-CO-, wherein R² and R³, equal to or different from each other at each occurrence, are divalent aliphatic hydrocarbon groups; and
d) at least one additive in an amount of 0 to 5 wt %,
wherein the total amount of a) to d) is 100 wt % of the composition.

One of the essential features of the present invention resides in using flat glass fibers in the composition, notably instead of standard glass fibers as reinforcing filler. It has also been unexpectedly found that both excellent heat resistance and satisfactory mechanical properties can be attained through combined use of above recited ingredients, i.e., the semi-aromatic, semi-crystalline polyamide, the flat glass fiber, and the aliphatic polyamide comprising recurring units complying with the formula -NH-R²-NH-CO-R³-CO-, wherein R² and R³, equal to or different from each other at each occurrence, are divalent aliphatic hydrocarbon groups.

Other characteristics, details and advantages of the present invention will emerge even more fully upon reading the description which follows.

Throughout the description, including the claims, the term "comprising one" should be understood as being synonymous with the term "comprising at least one", unless specified otherwise, and "between" should be understood as being inclusive of the limits.

In addition, according to certain embodiments of the present invention, it has been surprisingly found by the present inventor that use of at least one semi-aromatic, semi-crystalline polyamide, e.g., co-polyamide 6,6/6T such as those commercialized under tradename TechnylOne® in addition to at least one aliphatic polyamide comprising recurring units complying with the formula -NH-R²-NH-CO-R³-CO-, wherein R² and R³, equal to or different from each other at each occurrence, are divalent aliphatic hydrocarbon groups, such as polyamide 6,6, makes it possible to remarkably reduce the amount of flat glass fibers as reinforcing filler in a polyamide composition without deteriorating the mechanical and thermal properties.

In the present invention, the term "polyamide" is intended to denote, in particular, a polyamide comprising recurring units complying with any of formula (I) or formula (II) [recurring units (R_{PA})] :

formula (I) : -NH-R¹-CO-

formula (II) : -NH-R²-NH-CO-R³-CO-,

wherein :
- R¹, equal to or different from each other at each occurrence, is a divalent hydrocarbon group having from 1 to 17 carbon atoms;
- R², equal to or different from each other at each occurrence, is a divalent hydrocarbon group having from 1 to 18 carbon atoms; and
- R³, equal to or different from each other at each occurrence, is a divalent hydrocarbon group having from 1 to 16 carbon atoms.

Preferably, the polyamide consists essentially of recurring units (R_{PA}), as above detailed, being understood that end-chain, defects and other irregularities can be present in the polyamide chain, without affecting the properties thereof.

Recurring units (R_{PA}) of the polyamide can be all of the same type, or can be of more than one type, that is to say that the polyamide can be a homopolyamide or a co-polyamide.

In the present invention, the term "aliphatic polyamide" is intended to denote a polyamide, as above detailed, of which recurring units (R_{PA}), as above detailed, are recurring units of formula (I) or (II), wherein R¹, R² and R³ are aliphatic groups [recurring units (R_{AA})].

In the present invention, the term "semi-aromatic polyamide" is intended to denote a polyamide, as above detailed, of which more than 15 mole %, preferably more than 35 mole % of the recurring units (R_{PA}), as above detailed, are recurring units having the formula (II) in which either one of R² and R³ comprises at least one aromatic moiety, such as phenylene, naphthalene, p-biphenylene and meta-xylylene group, and the remainder comprises at least one non-aromatic moiety, such as an aliphatic group [recurring units (R_{SA})]. The semi-aromatic polyamide may comprise, in addition to recurring units (R_{SA}), as above detailed, of semi-aromatic type, recurring units (R_{PA}) which can be totally aliphatic or totally aromatic. In particular, the semi-aromatic polyamide can be a co-polyamide comprising recurring units (R_{SA}), as above detailed, and recurring units (R_{AA}), as above detailed : according to these embodiments, hence, the semi-aromatic polyamide comprises aliphatic and semi-aromatic polyamide recurring units.

According to the preferred embodiments, the semi-aromatic polyamide comprises :
- from 20.0 to 50.0 % moles, preferably from 30.0 to 40.0 % moles of recurring units (R_{SA}), as above detailed; and
- from 50.0 to 80.0 % moles, preferably from 60.0 to 70.0 % moles of recurring units (R_{AA}), as above detailed.

In the present invention, the term "semi-crystalline polyamide" is intended to denote, in particular, a polyamide comprising a crystallizable portion and an amorphous portion in the skeleton, i.e., an amorphous polymeric material contains randomly entangled chains and a crystalline material contains domains in which the polymer chains are packed in an ordered array, where these crystalline domains are embedded in an amorphous polymer matrix. The melting point may be measured by any known method, in particular by ASTM D 3418, i.e., by differential scanning calorimetry (DSC). The semi-crystalline polyamide of the present invention has a melting point greater than 150°C, preferably greater than 210°C, and more preferably greater than 230°C. In addition, the semi-crystalline polyamide of the present invention has a heat of fusion greater than 5 J/g, preferably 30 J/g, and more preferably 50 J/g.

Recurring units (R_{AA}) of the aliphatic polyamide can be notably obtained through polycondensation reaction of (1) one of β-lactam, 5-amino-pentanoic acid, ε-caprolactam, 9-aminononanoic acid, 10-aminodecanoic acid, 11-aminoundecanoic acid, 12-aminododecanoic acid and/or (2) polycondensation reaction of at least one of oxalic acid (HOOC-COOH), malonic acid (HOOC-CH₂-COOH), succinic acid [HOOC-(CH₂)₂-COOH], glutaric acid [HOOC-(CH₂)₃-COOH], adipic acid [HOOC-(CH₂)₄-COOH], 2,4,4-trimethyl-adipic acid [HOOC-CH(CH₃)-CH₂-C(CH₃)₂-CH₂-COOH], pimelic acid [HOOC-(CH₂)₅-COOH], suberic acid [HOOC-(CH₂)₆-COOH], azelaic acid [HOOC-(CH₂)₇-COOH], sebacic acid [HOOC-(CH₂)₈-COOH], undecanedioic acid [HOOC-(CH₂)₉-COOH], dodecanedioic acid [HOOC-(CH₂)₁₀-COOH], tetradecanedioic acid [HOOC-(CH₂)₁₂-COOH], octadecanedioic acid [HOOC-(CH₂)₁₆-COOH] with at least one of diamines, such as 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 1,6-diaminohexane, 1,7-diaminoheptane, 1,8-diamino-octane, 1,6-diamino-2,5-dimethylhexane, 1,6-diamino-2,4-dimethylhexane, 1,6-diamino-3,3-dimethylhexane, 1,6-diamino-2,2-dimethylhexane, 1,9-diaminononane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,10-diaminodecane, 1,8-diamino-1,3-dimethyloctane, 1,8-diamino-1,4-dimethyloctane, 1,8-diamino-2,4-dimethyloctane, 1,8-diamino-3,4-dimethyloctane, 1,8-diamino-4,5-dimethyloctane, 1,8-diamino-2,2-dimethyloctane, 1,8-diamino-3,3-dimethyloctane, 1,8-diamino-4,4-dimethyloctane, 1,6-diamino-2,4-diethylhexane, 1,9-diamino-5-methylnonane, 1,11-diaminoundecane, and 1,12-diaminododecane.

Exemplary recurring units (R_{AA}) of the aliphatic polyamide are notably :
(i) -NH-(CH₂)₅-CO-, i.e. recurring units which can be notably obtained via polycondensation reaction of ε-caprolactam;
(ii) -NH-(CH₂)₈-CO-, i.e. recurring units which can be notably obtained via polycondensation reaction of 9-aminononanoic acid;
(iii) -NH-(CH₂)₉-CO-, i.e. recurring units which can be notably obtained via polycondensation reaction of 10-aminodecanoic acid;
(iv) -NH-(CH₂)₁₀-CO-, i.e. recurring units which can be notably obtained via polycondensation reaction of 11-aminoundecanoic acid;
(v) -NH-(CH₂)₁₁-CO-, i.e. recurring units which can be notably obtained via polycondensation reaction of laurolactam;
(vi) -NH-(CH₂)₆-NH-CO-(CH₂)₄-CO-, i.e. recurring units which can be notably obtained via polycondensation reaction of hexamethylene diamine and adipic acid;
(vii) -NH-(CH₂)₆-NH-CO-(CH₂)₈-CO-, i.e. recurring units which can be notably obtained via polycondensation reaction of hexamethylene diamine and sebacic acid;
(viii) -NH-(CH₂)₆-NH-CO-(CH₂)₁₀-CO-, i.e. recurring units which can be notably obtained via polycondensation reaction of hexamethylene diamine and dodecanoic acid;
(ix) -NH-(CH₂)₁₀-NH-CO-(CH₂)₁₀-CO-, i.e. recurring units which can be notably obtained via polycondensation reaction of decamethylene diamine and dodecanoic acid;
(x) -NH-(CH₂)₆-NH-CO-(CH₂)₇-CO-, i.e. recurring units which can be notably obtained via polycondensation reaction of hexamethylene diamine and azelaic acid (otherwise known as nonandioic acid);
(xi) -NH-(CH₂)₁₂-NH-CO-(CH₂)₁₀-CO-, i.e. recurring units which can be notably obtained via polycondensation reaction of dodecamethylene diamine and dodecanoic acid;
(xii) -NH-(CH₂)₁₀-NH-CO-(CH₂)₈-CO-, i.e. recurring units which can be notably obtained via polycondensation reaction of decamethylene diamine and sebacic acid;
(xiii) -NH-(CH₂)₄-NH-CO-(CH₂)₄-CO-, i.e. recurring units which can be notably obtained via polycondensation reaction of 1,4-butanediamine and adipic acid; and
(xiv) -NH-(CH₂)₄-NH-CO-(CH₂)₈-CO-, i.e. recurring units which can be notably obtained via polycondensation reaction of 1,4-butanediamine and sebacic acid.

Recurring units (R_{SA}) of the semi-aromatic polyamide can be notably obtained (i) through polycondensation reaction of at least one aromatic dicarboxylic acid [acid (AR)], in particular selected from the group consisting of isophthalic acid (IA), and terephthalic acid (TA), 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene, 2,6-naphthalene dicarboxylic acid, 2,7-naphthalene dicarboxylic acid, 1,4-naphthalene dicarboxylic acid, 2,3-naphthalene dicarboxylic acid, 1,8-naphthalene dicarboxylic acid with at least one aliphatic diamine [amine (AL)], in particular selected from the group consisting of 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 1,6-diaminohexane, 1,7-diaminoheptane, 1,8-diamino-octane, 1,6-diamino-2,5-dimethylhexane, 1,6-diamino-2,4-dimethylhexane, 1,6-diamino-3,3-dimethylhexane, 1,6-diamino-2,2-dimethylhexane, 1,9-diaminononane, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane, 1,10-diaminodecane, 1,8-diamino-1,3-dimethyloctane, 1,8-diamino-1,4-dimethyloctane, 1,8-diamino-2,4-dimethyloctane, 1,8-diamino-3,4-dimethyloctane, 1,8-diamino-4,5-dimethyloctane, 1,8-diamino-2,2-dimethyloctane, 1,8-diamino-3,3-dimethyloctane, 1,8-diamino-4,4-dimethyloctane, 1,6-diamino-2,4-diethylhexane, 1,9-diamino-5-methylnonane, 1,11-diaminoundecane, and 1,12-diaminododecane, or (i) through polycondensation reaction of at least one aliphatic dicarboxylic acid [acid (AR)] selected from the group consisting of oxalic acid (HOOC-COOH), malonic acid (HOOC-CH₂-COOH), succinic acid [HOOC-(CH₂)₂-COOH], glutaric acid [HOOC-(CH₂)₃-COOH], 2,2-dimethyl-glutaric acid [HOOC-C(CH₃)₂-(CH₂)₂-COOH], adipic acid [HOOC-(CH₂)₄-COOH], 2,4,4-trimethyl-adipic acid [HOOC-CH(CH₃)-CH₂-C(CH₃)₂-CH₂-COOH], pimelic acid [HOOC-(CH₂)₅-COOH], suberic acid [HOOC-(CH₂)₆-COOH], azelaic acid [HOOC-(CH₂)₇-COOH], sebacic acid [HOOC-(CH₂)₈-COOH], undecanedioic acid [HOOC-(CH₂)₉-COOH], dodecanedioic acid [HOOC-(CH₂)₁₀-COOH], tetradecanedioic acid [HOOC-(CH₂)₁₁-COOH] with at least one aromatic diamine [amine (AL)], in particular selected from the group consisting of metaphenylene diamine, meta-xylylene diamine and para-xylylene diamine. Recurring units (R_{SA}) of the semi-aromatic polyamide are preferably obtained from polycondensation of at least one acid (AR) and one amine (AL), as above detailed.

The acid (AR) of recurring units (R_{SA}) is preferably at least one phthalic acid selected from the group consisting of isophthalic acid (IA), and terephthalic acid (TA). Isophthalic acid and terephthalic acid can be used alone or in combination. The phthalic acid is preferably terephthalic acid, optionally in combination with isophthalic acid. The amine (AL) of recurring units (R_{SA}) is preferably at least one diamine selected from the group consisting of 1,6-diaminohexane, 1,8-diamino-octane, 1,10-diaminodecane, 1,12-diaminododecane and mixtures thereof, and most preferably 1,6-diaminohexane.

Specific examples of a) the semi-aromatic, semi-crystalline polyamide may comprise, but are not limited to, co-polyamide 6,6/6T, co-polyamide 6,10/6T, co-polyamide 6,12/6T, co-polyamide 12/6T, and any combinations thereof, preferably co-polyamide 6,6/6T.

Particularly preferred semi-aromatic, semi-crystalline polyamide to be used in the composition of the present invention is co-polyamide 6,6/6T having a molar ratio of polyamide 6,6 to polyamide 6T between 4:1 and 1:1, preferably about 2:1.

One or more than one semi-aromatic, semi-crystalline polyamide can be used in the composition. Hence, according to certain embodiments, mixtures of semi-aromatic, semi-crystalline polyamides can be used.

In the present invention, a) at least one semi-aromatic, semi-crystalline polyamide, which has from 60 to 140 ml/g of viscosity number measured according to ISO 307, is preferred. ISO 307 method determines viscosity number of a polyamide as a 0.005 g/ml solution in 90 wt % of formic acid at 25°C. More preferably, the viscosity number of a) at least one semi-aromatic, semi-crystalline polyamide is 80 to 90 ml/g.

An amount of a) at least one semi-aromatic, semi-crystalline polyamide is from 70.0 to 84.0 wt % with respect to the total weight of the composition. Preferably, the amount of a) at least one semi-aromatic, semi-crystalline polyamide is from 74.5 wt % to 81.0 wt % with respect to the total weight of the composition.

The aromatic portions within the semi-aromatic, semi-crystalline polyamides serve to raise the melting point and the glass transition temperature of the semi-aromatic, semi-crystalline polyamides compared to the aliphatic polyamides.

In general, the semi-aromatic, semi-crystalline polyamides are highly rigid polymers displaying high modulus and strength but show a relatively high brittleness due to the presence of the aromatic portions within the semi-aromatic polyamides, which limits their use in certain applications. These problems can be at least partly solved through the incorporation of c) at least one aliphatic polyamide comprising recurring units complying with the formula -NH-R²-NH-CO-R³-CO-, wherein R² and R³, equal to or different from each other at each occurrence, are divalent aliphatic hydrocarbon groups, into the polyamide composition.

With the reason as above, c) at least one aliphatic polyamide comprising recurring units complying with the formula -NH-R²-NH-CO-R³-CO-, wherein R² and R³, equal to or different from each other at each occurrence, are divalent aliphatic hydrocarbon groups, is used in the present composition in accordance with the invention to compensate a bit brittle characteristic of a) the semi-aromatic, semi-crystalline polyamide.

Specific examples of said c) at least one aliphatic polyamide which can be advantageously used in the hereby provided composition are notably :
- polyamide 6,6, polyamide 6,10, polyamide 6,12, polyamide 6,6/6,10, and any combinations thereof.

Particularly preferred aliphatic polyamide to be used in the composition of the present invention is polyamide 6,6.

In the present invention, c) at least one aliphatic polyamide, which has from 105 to 200 ml/g of viscosity number measured according to ISO 307, is preferred. ISO 307 method determines viscosity number of a polyamide as a 0.005 g/ml solution in 90 wt % of formic acid at 25°C. More preferably, the viscosity number of c) at least one aliphatic polyamide is 120 to 130 ml/g.

An amount of said c) at least one aliphatic polyamide is from 4.0 to 10.0 wt % with respect to the total weight of the composition. Preferably, the amount of said c) at least one aliphatic polyamide is from 5.0 wt % to 8.5 wt % with respect to the total weight of the composition.

The composition according to the present invention comprises b) at least one flat glass fiber as reinforcing filler.

In the present invention, the term "flat glass fibers" is intended to denote, in particular, glass fibers having a non-circular cross section. Flat glass fibers suitable for being used as reinforcing filler in the composition of the present invention may have any non-circular cross section such as an elliptical section, oblong-circular section, rectangle section, a section in which half rounds are connected to both short sides of a rectangle, and cocoon section.

The aspect ratio (= major axis/minor axis) of said non-circular cross section of the flat glass fibers is advantageously from 1.5 to 10, preferably from 2.0 to 6.0.

The aspect ratio described in the present specification can be determined by analyzing an image obtained by observing a cross section of the flat glass fiber with a scanning electron microscope (SEM), and circumscribing the non-circular section of the flat glass fiber with a rectangle. The aspect ratio is obtained by calculating A (= length of Rₐ)/B (= length of R_{b}) wherein A and B are the length of a long side Rₐ and a short side R_{b} of a rectangle circumscribed to the flat glass fiber in the observed image.

Nature of glasses constituting the flat glass fibers of the composition of the present invention is not particularly limited and can include E glass, T glass, NE glass, C glass, S glass, S2 glass and R glass, and the like.

The amount of b) at least one flat glass fibers as reinforcing filler is from 12.0 to less than 20.0 wt % with respect to the total weight of the composition, such as for instance 12, 13, 14, 15, 16, 17, 18, 19, and 19.5 wt % and any ranges comprised between these values. Preferably, the amount of b) at least one flat glass fibers as reinforcing filler is from 13.0 to 17.0 wt % with respect to the total weight of the composition.

In one embodiment of the present invention, the composition may also comprise a blend of flat glass fibers and standard glass fibers as reinforcing filler.

Further, the composition according to the present invention may optionally comprise d) at least one additive. Examples of the additives, which may be advantageously used, include a colorant, a lubricant, a light and/or heat stabiliser, an impact modifier, a flame retardant, a plasticizer, a nucleating agent, a catalyst, an antioxidant, an antistatic agent, a pigment, and any combinations thereof.

In a particular embodiment of the present invention, an amount of d) at least one additive may be from 0 to 5.0 wt %, preferably 0 to 3.5 wt % with respect to the total weight of the composition. The range of concentration by weight of the additive, if contained in the composition of the present invention, may be from 0.5 to 3.5 wt %, preferably from 0.5 to 2.5 wt % with respect to the total weight of the composition.

In a preferred embodiment of the present invention, the composition comprises :
a) at least one semi-aromatic polyamide in an amount of 74.5 to 81.0 wt %;
b) at least one flat glass fiber in an amount of 13.0 to 17.0 wt %;
c) at least one aliphatic polyamide in an amount of 5.0 to 8.5 wt %; and
d) at least one additive in an amount of 0.5 to 2.5 wt %,
wherein the total amount of a) to d) is 100 wt % of the composition.

For the preparation of a polyamide composition, these additives and flat glass fibers may be added to the polyamide via conventional means suitable for the additives and the flat glass fibers, for example, during the polymerization or as a molten mixture. The flat glass fibers are preferably metered into the polyamide melt via a side feeder.

Another aspect of the present invention relates to molded parts produced by injection molding of the present polyamide composition.

Further aspect of the present invention relates to a use of the molded parts to produce automobile or electrical components, for example engine components such as intercooler air duct, timing belt cover and engine cover, and housings or housing parts of electrical apparatuses, preferably engine cover for an automobile.

The composition according to the invention may be used as a raw material, for example for the preparation of articles by injection molding, by injection/blow molding, by extrusion or by extrusion/blow molding, preferably by injection molding. According to an embodiment, the polyamide composition is extruded in the form of rods, for example, in a twin-screw extruder, and then chopped into granules. The molded parts are then prepared by melting said granules and feeding the molten composition into injection molding devices.

Other details or advantages of the present invention will become more clearly apparent through the examples given below. The present invention will be elucidated by the following examples, which are intended to demonstrate, but not to restrict, the invention.

### EXAMPLES

Chemical reagents used in the Examples are specified as follows :
- Polyamide 6,6/6T : STABAMID® 26UE1 available from Solvay Polyamide & Intermediates, having a melting point of about 278°C and a heat of fusion of about 57 J/g;
- Polyamide 6,6 : STABAMID® 26AE1 K PA66 available from Solvay Polyamide & Intermediates;
- Polyamide 6 : Domamid®24 available from Domo Chemicals;
- Standard Glass Fibers (10 microns) : ECSO® 3T-289H glass fibers from Nippon Electric Glass Co., Ltd.;
- Standard Glass Fibers (7 microns) : ECS301-HP glass fibers from Chongqing Polycomp International Corp.; and
- Flat Glass Fibers : ECS301-HF having aspect ratio of 4:1 available from Chongqing Polycomp International Corp.

The polyamide compositions were obtained by i) feeding all the components indicated in Table 1 below except glass fibers through main feeder after pre-mixing and glass fibers through a side feeder of a twin-screw extruder of W&P ZSK26MC, available from Coperion, ii) mixing all the components in the extruder, and iii) subsequently extruding the mixture. The extrusion temperatures were 280-280-280-300-300-300-200°C from nozzle to hopper, and the throughput and RPM were 20 kg/hr and 250, respectively. The extrudates were then cooled in water at room temperature.

The compositions prepared as Ex. 1 to Ex. 5 are detailed in Table 1 below. The proportions are indicated in weight percentages (wt %) in the composition.

**Table 1**

| Component (in wt %) | Ex. 1 | Ex. 2 | Ex. 3 | Ex. 4 | Ex. 5 |
|---|---|---|---|---|---|
| Polyamide 6,6/6T | 74.48 | 74.48 | 74.48 | - | 74.48 |
| Polyamide 6,6 | 6.0 | 6.0 | 6.0 | - | - |
| Polyamide 6 | - | - | - | 80.48 | 6.0 |
| Standard Glass Fibers (10 microns) | 17.0 | - | - | - | - |
| Standard Glass Fibers (7 microns) | - | 17.0 | - | - | - |
| Flat Glass Fibers | - | - | 17.0 | 17.0 | 17.0 |
| Additives | 2.52 | 2.52 | 2.52 | 2.52 | 2.52 |
| Total | 100 | 100 | 100 | 100 | 100 |

The mechanical properties of these compositions were measured before and also after thermal aging, whereas HDT was only measured before thermal aging. The results were summarized in Table 2 and Table 3 below, i.e., the tensile strength (TS) to break, Charpy impact (kJ/m²), and HDT (°C). TS to break was measured according to ISO 527, Charpy impact according to ISO 148, and HDT according to ASTM D648. In addition, the retention ratio of TS to break and Charpy impact after thermal aging was calculated in Table 4 below.

The thermal aging was implemented at 180°C for 1000 hours.

**Table 2 (Before thermal aging)**

| | Ex. 1 | Ex. 2 | Ex. 3 | Ex. 4 | Ex. 5 |
|---|---|---|---|---|---|
| Tensile strength (MPa) | 112 | 136 | 99 | 100 | 105 |
| Charpy impact (kJ/m2) | 4.99 | 5.6 | 6.8 | 6.6 | 7.0 |
| HDT (°C) | 239 | 243 | 242 | 200 | 215 |

**Table 3 (After thermal aging)**

| | Ex. 1 | Ex. 2 | Ex. 3 | Ex. 4 | Ex. 5 |
|---|---|---|---|---|---|
| Tensile strength (MPa) | 77.8 | 79.2 | 76.24 | 81.35 | 76.5 |
| Charpy impact (kJ/m2) | 4.83 | 4.33 | 6.39 | 6.5 | 6.2 |

**Table 4 (Retention ratio after thermal aging)**

| | Ex. 1 | Ex. 2 | Ex. 3 | Ex. 4 | Ex. 5 |
|---|---|---|---|---|---|
| Tensile strength (%) | 69.46 | 58.24 | 77.01 | 81.35 | 72.86 |
| Charpy impact (%) | 96.79 | 77.32 | 93.97 | 98.48 | 88.57 |

As being confirmed from the experimental data in Table 2 and Table 3, the initial value for TS to break for the compositions having 17 wt % of flat glass fibers (Inventive composition : Ex. 3 and Comparative compositions : Ex. 4 and Ex. 5) was less than those for the compositions having same amount of standard glass fibers having diameters 10 and 7 microns, respectively (Comparative compositions : Ex. 1 and Ex. 2). However, the values after thermal aging at 180°C for 1000 hours were similar for Ex.1 to Ex. 5, i.e., the retention ratios after thermal aging of Ex. 3 to Ex. 5 were superior to those of Ex. 1 and Ex. 2 as shown in the above Table 4. It was also observed that the retention ratio of Charpy impact before and after thermal aging showed notably excellent level for Ex. 3.

The above experimental data show that 17 wt % of flat glass fibers resulted in high preservation of the mechanical properties of the relevant polyamide composition after thermal aging in comparison with same amount of standard glass fibers. In particular, TS to break after thermal aging for the Inventive composition (Ex. 3) decreased only about 23 %, whereas about 30 %, about 42 %, about 29 %, and about 27 % decrease was observed for the Comparative compositions (Ex. 1, Ex. 2, Ex. 4, and Ex. 5), respectively.

Further, the above experimental data also show that the specific combination of polyamides substantially affected HDT. The Comparative compositions having different polymer structure (Ex. 4 and Ex. 5) in comparison with the Inventive composition (Ex. 3) as described in Table 1, exhibited significant HDT decrease, even though those Comparative compositions comprising 17 wt % flat glass fibers showed high preservation of the mechanical properties of the relevant polyamide composition after thermal aging, as mentioned above. In Table 2, HDT of Ex. 4 was 200°C and that of Ex. 5 was 215°C, whereas HDT of Ex. 3 was 242°C.

## Claims

1. A composition comprising :
a) at least one semi-aromatic, semi-crystalline polyamide in an amount of 70 to 84 % by weight (wt %);
b) at least one flat glass fiber in an amount of 12 to less than 20 wt %;
c) at least one aliphatic polyamide comprising recurring units complying with the formula -NH-R²-NH-CO-R³-CO- in an amount of 4 to 10 wt %, wherein R² and R³, equal to or different from each other at each occurrence, are divalent aliphatic hydrocarbon groups; and
d) at least one additive in an amount of 0 to 5 wt %,
wherein the total weight of a) to d) is 100 wt % of the composition.

2. The composition according to Claim 1, wherein a) the semi-aromatic, semi-crystalline polyamide is selected from the group consisting of co-polyamide 6,6/6T, co-polyamide 6,10/6T, co-polyamide 6,12/6T, co-polyamide 12/6T, and any combinations thereof, preferably co-polyamide 6,6/6T.

3. The composition according to Claim 1 or 2, wherein a) the semi-aromatic, semi-crystalline polyamide is co-polyamide 6,6/6T having a molar ratio of polyamide 6,6 to polyamide 6T comprised between 4:1 and 1:1, preferably about 2:1.

4. The composition according to any one of Claims 1 to 3, wherein the aspect ratio of b) the flat glass fibers is from 1.5 to 10, preferably from 2.0 to 6.0.

5. The composition according to any one of Claims 1 to 4, wherein R² and R³ in the formula -NH-R²-NH-CO-R³-CO- are a divalent hydrocarbon group having 1 to 18 carbon atoms, and a divalent hydrocarbon group having 1 to 16 carbon atoms, respectively.

6. The composition according to any one of Claims 1 to 5, wherein c) the aliphatic polyamide is selected from the group consisting of polyamide 6,6, polyamide 6,10, polyamide 6,12, polyamide 6,6/6,10, and any combinations thereof, preferably polyamide 6,6.

7. The composition according to any one of Claims 1 to 6, wherein d) at least one additive is selected from the group consisting of a colorant, a lubricant, a light and/or heat stabiliser, an impact modifier, a flame retardant, a plasticizer, a nucleating agent, a catalyst, an antioxidant, an antistatic agent, a pigment, and any combinations thereof.

8. The composition according to any one of Claims 1 to 7, comprising a) at least one semi-aromatic, semi-crystalline polyamide in an amount of 74.5 to 81.0 wt % with respect to the total weight of the composition.

9. The composition according to any one of Claims 1 to 8, comprising b) at least one flat glass fiber in an amount of 13.0 to 17.0 wt % with respect to the total weight of the composition.

10. The composition according to any one of Claims 1 to 9, comprising c) at least one aliphatic polyamide comprising recurring units complying with the formula -NH-R²-NH-CO-R³-CO- in an amount of 5.0 to 8.5 wt % with respect to the total weight of the composition.

11. Molded parts produced by injection molding of the composition according to any one of Claims 1 to 10.

12. Use of the molded parts according to Claim 11 to produce engine components such as intercooler air duct, timing belt cover and engine cover, or housings or housing parts of electrical apparatuses, preferably engine cover for an automobile.

13. Engine components, or housings or housing parts of electrical apparatuses comprising the molded parts according to Claim 11.

14. An engine cover for an automobile comprising the molded parts according to Claim 11.

## Patentansprüche

1. Zusammensetzung, umfassend:
a) wenigstens ein halbaromatisches halbkristallines Polyamid in einer Menge von 70 bis 84 Gewichts-% (Gew.-%);
b) wenigstens eine flache Glasfaser in einer Menge von 12 bis weniger als 20 Gew.-%;
c) wenigstens ein aliphatisches Polyamid, das Wiederholungseinheiten umfasst, die der Formel -NH-R²-NH-CO-R³-CO- entsprechen, in einer Menge von 4 bis 10 Gew.-%, wobei R² und R³, die bei jedem Auftreten gleich oder voneinander verschieden sind, zweiwertige aliphatische Kohlenwasserstoffgruppen sind; und
d) wenigstens einen Zusatzstoff in einer Menge von 0 bis 5 Gew.-%,
wobei das Gesamtgewicht von a) bis d) 100 Gew.-% der Zusammensetzung beträgt.

2. Zusammensetzung gemäß Anspruch 1, wobei a) das halbaromatische halbkristalline Polyamid ausgewählt ist aus der Gruppe bestehend aus Copolyamid 6,6/6T, Copolyamid 6,10/6T, Copolyamid 6,12/6T, Copolyamid 12/6T und beliebigen Kombinationen davon, vorzugsweise Copolyamid 6,6/6T.

3. Zusammensetzung gemäß Anspruch 1 oder 2, wobei a) das halbaromatische halbkristalline Polyamid Copolyamid 6,6/6T mit einem Molverhältnis von Polyamid 6,6 zu Polyamid 6T in dem Bereich zwischen 4:1 und 1:1, vorzugsweise etwa 2:1, ist.

4. Zusammensetzung gemäß einem der Ansprüche 1 bis 3, wobei das Aspektverhältnis der b) flachen Glasfasern von 1,5 bis 10 beträgt, vorzugsweise von 2,0 bis 6,0.

5. Zusammensetzung gemäß einem der Ansprüche 1 bis 4, wobei R² und R³ in der Formel -NH-R²-NH-CO-R³-CO-eine zweiwertige Kohlenwasserstoffgruppe mit 1 bis 18 Kohlenstoffatomen bzw. eine zweiwertige Kohlenwasserstoffgruppe mit 1 bis 16 Kohlenstoffatomen sind.

6. Zusammensetzung gemäß einem der Ansprüche 1 bis 5, wobei c) das aliphatische Polyamid ausgewählt ist aus der Gruppe bestehend aus Polyamid 6,6, Polyamid 6,10, Polyamid 6,12, Polyamid 6,6/6,10 und beliebigen Kombinationen davon, vorzugsweise Polyamid 6,6.

7. Zusammensetzung gemäß einem der Ansprüche 1 bis 6, wobei d) wenigstens ein Zusatzstoff ausgewählt ist aus der Gruppe bestehend aus einem Farbstoff, einem Gleitmittel, einem Licht- und/oder Wärmestabilisator, einem Schlagzähmodifikator, einem Flammhemmer, einem Weichmacher, einem Nukleierungsmittel, einem Katalysator, einem Antioxidationsmittel, einem antistatischen Mittel, einem Pigment und einer beliebigen Kombination davon.

8. Zusammensetzung gemäß einem der Ansprüche 1 bis 7, umfassend a) wenigstens ein halbaromatisches halbkristallines Polyamid in einer Menge von 74,5 bis 81,0 Gew.-% bezogen auf das Gesamtgewicht der Zusammensetzung.

9. Zusammensetzung gemäß einem der Ansprüche 1 bis 8, umfassend b) wenigstens eine flache Glasfaser in einer Menge von 13,0 bis 17 Gew.-% bezogen auf das Gesamtgewicht der Zusammensetzung.

10. Zusammensetzung gemäß einem der Ansprüche 1 bis 9, umfassend c) wenigstens ein aliphatisches Polyamid, das Wiederholungseinheiten umfasst, die der Formel -NH-R²-NH-CO-R³-CO- entsprechen, in einer Menge von 5,0 bis 8,5 Gew.-% bezogen auf das Gesamtgewicht der Zusammensetzung.

11. Formteile, die durch Spritzguss der Zusammensetzung gemäß einem der Ansprüche 1 bis 10 hergestellt sind.

12. Verwendung der Formteile gemäß Anspruch 11 zum Herstellen von Motorkomponenten, wie z. B. Zwischenkühlerluftkanälen, Steuerriemenhauben und Motorhauben, oder Gehäusen oder Gehäuseteilen von Elektrogeräten, vorzugsweise Motorhauben für ein Automobil.

13. Motorkomponenten oder Gehäuse oder Gehäuseteile von Elektrogeräten, die die Formteile gemäß Anspruch 11 umfassen.

14. Motorhaube für ein Automobil, umfassend die Formteile gemäß Anspruch 11.

## Revendications

1. Composition comprenant :
a) au moins un polyamide semi-aromatique, semi-cristallin, dans une quantité de 70 à 84 % en poids (%pds) ;
b) au moins une fibre de verre plate dans une quantité de 12 à moins de 20 % en poids ;
c) au moins un polyamide aliphatique comprenant des unités structurales selon la formule -NH-R²-NH-CO-R³-CO-dans une quantité de 4 à 10 % en poids, dans laquelle R² et R³, identiques ou différents l'un de l'autre et à chaque occurrence, sont des groupes hydrocarbonés aliphatiques divalents ; et
d) au moins un additif dans une quantité de 0 à 5 % en poids,
le poids total de a) à d) représentant 100 % en poids de la composition.

2. Composition selon la revendication 1, dans laquelle a) le polyamide semi-aromatique, semi-cristallin est sélectionné dans le groupe constitué du copolyamide 6,6/6T, du copolyamide 6,10/6T, du copolyamide 6,12/6T, du copolyamide 12/6T, et de n'importe quelles combinaisons de ceux-ci, préférablement le copolyamide 6,6/6T.

3. Composition selon la revendication 1 ou 2, dans laquelle a) le polyamide semi-aromatique, semi-cristallin est le copolyamide 6,6/6T ayant un rapport molaire du polyamide 6,6 contre le polyamide 6T de 4:1 à 1:1, préférablement d'environ 2:1.

4. Composition selon l'une quelconque des revendications 1 à 3, dans laquelle le rapport d'allongement de b) les fibres de verre plates est de 1,5 à 10, préférablement de 2,0 à 6,0.

5. Composition selon l'une quelconque des revendications 1 à 4, dans laquelle R² et R³ dans la formule -NH-R²-NH-CO-R³-CO- sont un groupe hydrocarboné divalent comportant 1 à 18 atomes de carbone, et un groupe hydrocarboné divalent comportant 1 à 16 atomes de carbone, respectivement.

6. Composition selon l'une quelconque des revendications 1 à 5, dans laquelle c) le polyamide aliphatique est sélectionné dans le groupe constitué du polyamide 6,6, du polyamide 6,10, du polyamide 6,12, du polyamide 6,6/6,10, et de n'importe quelles combinaisons de ceux-ci, préférablement le polyamide 6, 6.

7. Composition selon l'une quelconque des revendications 1 à 6, dans laquelle d) au moins un additif est sélectionné dans le groupe constitué d'un colorant, d'un lubrifiant, d'un stabilisant à la lumière et/ou à la chaleur, d'un modificateur de résistance aux chocs, d'un retardateur de flamme, d'un plastifiant, d'un agent de nucléation, d'un catalyseur, d'un antioxydant, d'un agent antistatique, d'un pigment, et de n'importe quelles combinaisons de ceux-ci.

8. Composition selon l'une quelconque des revendications 1 à 7, comprenant a) au moins un polyamide semi-aromatique, semi-cristallin, dans une quantité de 74,5 à 81,0 % en poids relativement au poids total de la composition.

9. Composition selon l'une quelconque des revendications 1 à 8, comprenant b) au moins une fibre de verre plate, dans une quantité de 13,0 à 17,0 % en poids relativement au poids total de la composition.

10. Composition selon l'une quelconque des revendications 1 à 9, comprenant c) au moins un polyamide aliphatique comprenant des unités structurales selon la formule -NH-R²-NH-CO-R³-CO- dans une quantité de 5,0 à 8,5 % en poids relativement au poids total de la composition.

11. Pièces moulées produites par moulage par injection de la composition selon l'une quelconque des revendications 1 à 10.

12. Utilisation des pièces moulées selon la revendication 11 pour produire des composants de moteurs tels qu'un conduit d'air de refroidisseur intermédiaire, un capot de courroie de distribution et un capot de moteur, ou des carters ou des pièces de carters d'appareils électriques, préférablement un capot de moteur pour une automobile.

13. Composants de moteurs, ou carters ou pièces de carters d'appareils électriques, comprenant les pièces moulées selon la revendication 11.

14. Capot de moteur pour une automobile comprenant les pièces moulées selon la revendication 11.
